# EUROPEAN PATENT SPECIFICATION

(11) **EP 4 312 341 B1**
(45) Date of publication and mention of the grant of the patent: **22.01.2025**
(21) Application number: 23182953.2
(22) Date of filing: 03.07.2023
(51) Int. Cl.: B60L 53/22, B60L 53/36, H01R 13/631, H02J 7/00, B60L 53/16

(54) **AUTOMATED DOCKING SYSTEM FOR CHARGING CHARGEABLE MOBILE DEVICES**
AUTOMATISIERTES ANDOCKSYSTEM ZUM LADEN AUFLADBARER MOBILER VORRICHTUNGEN
SYSTÈME D'ACCUEIL AUTOMATISÉ POUR CHARGER DES DISPOSITIFS MOBILES CHARGEABLES

(30) Priority: 19.07.2022 IN 202221041399
(43) Date of publication of application: 31.01.2024
(73) Proprietor: Tata Consultancy Services Limited, Maharashtra (IN)
(72) Inventor: CHINTALAPALLI PATTA, VENKAT RAJU, 560066 Banglore (IN); BANGALORE SRINIVAS, VENKATESH PRASAD, 560009 Bangalore (IN); KAMBLE, PRADEEP PRABHAKAR, 560009 Bangalore (IN); KALHAPURE, SWAPNIL SUNIL, 560066 Bangalore (IN); BHOGINENI, SREEHARI KUMAR, 560009 Bangalore (IN)
(74) Representative: Goddar, Heinz J.

(56) References cited:
- EP-B1- 3 451 888
- WO-A1-2019/213824
- CN-A- 107 017 676
- CN-A- 110 071 403
- CN-A- 111 009 781
- CN-A- 113 696 768
- US-A1- 2007 030 645
- US-A1- 2021 170 610
- US-A1- 2021 347 274
- US-B2- 10 625 611
- US-B2- 10 644 519
- IAROSLAV OKUNEVICH ET AL: "MobileCharger: an Autonomus Mobile Robot with Inverted Delta Actuator for Robust and Safe Robot Charging", ARXIV.ORG, CORNELL UNIVERSITY LIBRARY, 201 OLIN LIBRARY CORNELL UNIVERSITY ITHACA, NY 14853, 22 July 2021 (2021-07-22), XP091015047

## Description

### CROSS-REFERENCE TO RELATED APPLICATIONS AND PRIORITY

The present application claims priority from Indian patent application, Application No. 202221041399, filed in India on July 19, 2022.

### TECHNICAL FIELD

The disclosure herein generally relates to a docking system, and, more particularly, to automated docking system for charging chargeable mobile devices.

### BACKGROUND

With advancement in programming technology, programmable electronic devices are becoming more prevalent and are used to perform multiple tasks that are time consuming. Many of such programmable electronic devices are chargeable mobile devices such as autonomous mobile robots. These chargeable mobile devices require regular charging to keep them operational. The charging or docking process could be manual or automated. For automated charging, the chargeable mobile devices need a docking station. Generally, the docking station are idle devices with charging ports to which the chargeable mobile devices automatically get docked. However, conventionally, the chargeable mobile devices fail in docking themselves in a first attempt due to multiple reasons. These multiple reasons may include sensor noise, lack of mechanical flexibility in the docking stations, lack of features for a chargeable mobile device to automatically detect the docking stations, and/or the like. Further, conventional systems generally utilize expensive technology like wireless charging leading to higher cost. Relevant prior art of this technical field can be found in:
US 2021/347274 A1 (KADOKO JONAH [US] ET AL) 11 November 2021 (2021-11-11);US 10 644 519 B2 (AMAZON TECH INC [US]) 5 May 2020 (2020-05-05);EP 3 451 888 B1 (KAERCHER ALFRED SE & CO KG [DE]) 29 June 2022 (2022-06-29); CN 107 017 676 A (ZHEJIANG GUOZI ROBOT TECH CO LTD) 4 August 2017 (2017-08-04); US 2007/030645 A1 (HERBERHOLT STEVEN J [US] ET AL) 8 February 2007 (2007-02-08); CN 111 009 781 A (CHENGDU SIWI HIGH TECH IND GARDEN CO LTD) 14 April 2020 (2020-04-14); US 10 625 611 B2 (CLEARPATH ROBOTICS INC [CA]) 21 April 2020 (2020-04-21); CN 113 696 768 A (TIANJIN SANTE ELECTRONICS CO LTD) 26 November 2021 (2021-11-26); CN 110 071 403 A (XIAN TGOOD INTELLIGENT CHARGING TECH CO LTD) 30 July 2019 (2019-07-30); WO 2019/213824 A1 (SHENZHEN DORABOT INC [CN]) 14 November 2019 (2019-11-14); US 2021/170610 A1 (KANG HOSEONG [KR] ET AL) 10 June 2021 (2021-06-10)

### SUMMARY

Embodiments of the present disclosure present technological improvements as solutions to one or more of the above-mentioned technical problems recognized by the inventors in conventional systems. For example, in one aspect, there is provided an automated docking system for charging a chargeable mobile device. The automated docking system comprising: a docking station, wherein the docking station comprises: a base assembly, wherein the base assembly comprises: a base plate, wherein the base plate comprises a first end, a second end, a plurality of mounting holes adapted for provisioning grouting and a plurality of mounting holes adapted for provisioning a battery charger mount plate, and wherein the first end of the base plate is connected to a first dead weight and the second end of the base plate is connected to a second dead weight; a rear plate coupled to the base plate through a plurality of coil springs, wherein each of the plurality of coil springs is adapted to provide a cushioning effect for the docking station during an autodocking process of the automated docking system for charging the chargeable mobile device; a floating assembly, wherein the floating assembly comprises: a rod housing, wherein the rod housing comprises a first side and a second side, and wherein each side of the rod housing comprises a set of holes; a floating plate, wherein the floating plate comprises a pair of flanges and a flat portion substantially protruding towards an angular assembly, wherein each flange of the pair of flanges comprises a corresponding hole; a first set of guide rods, wherein each guide rod of the first set of guide rods comprises a first end and a second end, and wherein each guide rod of the first set of guide rods is adapted to pass through a corresponding hole of the set of holes at a corresponding side of the rod housing, and each of the first end and the second end of each of the first set of guide rods is connected to a corresponding flange from the pair of flanges of the floating plate via one or more screws; a pair of stoppers, wherein each stopper from the pair of stoppers is connected to a corresponding side from the first side and the second side of the rod housing and is adapted to adjust a lateral stroke required for the auto docking process of the automated docking system; and a first set of tension springs inserted over the first set of guide rods and positioned between the rod housing and the pair of flanges of the floating plate, wherein the first set of tension springs is adapted to permit a lateral movement of the docking station from an initial position to a desired position during the autodocking process of the automated docking system for charging the chargeable mobile device; a center assembly, wherein the center assembly comprises: a mounting block having a plurality of holes; a second set of guide rods, wherein each guide rod of the second set of guide rods comprises a first end and a second end, and wherein the first end of each guide rod of the second set of guide rods is sliding inside a corresponding hole of the plurality of holes of the mounting block and connected with each other by a small plate and one or more screws, and the second end of each guide rod of the second set of guide rods is coupled to the rod housing; and a second set of tension springs inserted over the second set of guide rods and positioned between the rod housing and the mounting block, wherein the second set of tension springs is adapted to permit a longitudinal movement of the docking station from an initial position to a desired position during the autodocking process of the automated docking system for charging the chargeable mobile device; the angular assembly configured to provide an angular motion to the docking station during the autodocking process of the automated docking system for charging the chargeable mobile device; and a fleet management network comprising a plurality of the chargeable mobile devices to be charged at the docking station.

In accordance with an embodiment of the present disclosure, the angular assembly comprises: a table assembly mounted on the floating plate; a charging pad mounting plate, wherein the charging pad mounting plate comprises a top surface and a bottom surface; a charging pad, wherein the charging pad is coupled to the table assembly through the charging pad mounting plate; a plurality of standoffs, wherein each standoff from the plurality of standoffs comprises a first end and a second end, and wherein the first end of each standoff from the plurality of standoffs is connected to the charging pad mounting plate; a plurality of rollers, wherein each roller from the plurality of rollers is adapted to be connected to a corresponding second end of standoff from the plurality of standoffs via a screwing mechanism; a plurality of self-centering springs, wherein each self-centering spring from the plurality of self-centering springs comprises a first end and a second end, and wherein the first end of each self-centering spring from the plurality of self-centering springs is connected to a first set of pins mounted on the floating plate and the second end of each self-centering spring from the plurality of self-centering springs is connected to a second set of pins mounted on to the bottom surface of the charging pad mounting plate; a ball plunger, wherein the ball plunger comprises a first end and a second end, and wherein the first end of the ball plunger is adapted to be in contact with a hole made on the floating plate when the automated docking system is in an idle state and the second end of the ball plunger is mounted to the charging pad mounting plate; and a plurality of angle restrictors adapted to control the angular motion of the angular assembly, wherein the plurality of angle restrictors are mounted onto the floating plate and positioned adjacent to the ball plunger.

In accordance with an embodiment of the present disclosure, the automated docking system further comprises a housing cover enclosing the docking station and mounted to the base plate of the base assembly, wherein the housing cover comprises a plurality of patterns that enable the plurality of chargeable devices a position and orientation (pose) detection of the docking station.

In accordance with an embodiment of the present disclosure, the battery charger mount plate is adapted to hold a battery charger with help of a toggle clamp which is mounted onto the battery charger mount plate.

In accordance with an embodiment of the present disclosure, the table assembly is a turn table assembly.

In accordance with an embodiment of the present disclosure, the plurality of rollers are configured to guide docking element mounted to each of the plurality of chargeable devices.

In accordance with an embodiment of the present disclosure, the plurality of self-centering springs are configured to ensure keeping the angular assembly at center with help of the ball plunger.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts a block diagram of an automated docking system for charging chargeable mobile devices, in accordance with an embodiment of the present disclosure.
FIG. 2 depicts an isometric view of a docking station of the automated docking system for charging chargeable mobile devices, in accordance with an embodiment of the present disclosure.
FIG. 3 depicts a cross-sectional top view of the docking station of the automated docking system for charging chargeable mobile devices, in accordance with an embodiment of the present disclosure.
FIG. 4 depicts an isometric view of the docking station of the automated docking system for charging chargeable mobile devices without battery charger and a housing cover, in accordance with an embodiment of the present disclosure.
FIG. 5 depicts a cross-sectional side view of the docking station of the automated docking system for charging chargeable mobile devices with battery charger, in accordance with an embodiment of the present disclosure.
FIG. 6 depicts an isometric view of a rod housing of the automated docking system of FIG. 1, in accordance with an embodiment of the present disclosure.
FIG. 7 depicts an isometric view of a floating plate of the automated docking system of FIG. 1, in accordance with an embodiment of the present disclosure.
FIG. 8 depicts an isometric view of a floating assembly of the automated docking system of FIG. 1 excluding the rod housing, in accordance with an embodiment of the present disclosure.
FIG. 9. depicts an inner view of the docking station of the automated docking system for charging chargeable mobile devices, in accordance with an embodiment of the present disclosure.
FIG. 10 depicts a front view of the docking station of the automated docking system for charging chargeable mobile devices, in accordance with an embodiment of the present disclosure.
FIG. 11 depicts a functional diagram of a fleet management network of the automated docking system for charging chargeable mobile devices (robot), in accordance with an embodiment of the present disclosure.
FIG. 12 depicts a functional block diagram of a chargeable mobile device associated with fleet management network of the automated docking system, in accordance with an embodiment of the present disclosure.
FIG. 13, with reference to FIGS. 1 through 12, depicts an exemplary flow chart illustrating an autodocking process for charging the chargeable mobile device using the automated docking system 100 of FIG. 1, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Programmable electronic devices are becoming more prevalent in many applications and are used to perform multiple tasks that are time consuming. Many of such programmable electronic devices are chargeable mobile devices such as autonomous mobile robots. These chargeable mobile devices require regular charging. The charging process could be manual or automated. For automated charging, the chargeable mobile devices need a docking station. Generally, the docking station are idle devices with charging ports to which the chargeable mobile devices automatically get dock. However, conventionally, the chargeable mobile devices fail in docking themselves in a first attempt due to multiple reasons. These multiple reasons may include sensor noise, lack of mechanical flexibility in the docking station, lack of features for a chargeable mobile device to automatically detect the docking station, and/or the like. Further, conventional systems generally utilize expensive technology like wireless charging leading to higher cost. The system of the present disclosure addresses the unresolved problem of automated docking in conventional docking systems by enabling precise docking of the chargeable mobile device and also making the docking station intelligent. This leads to the chargeable mobile devices to effectively communicate with the docking station and share data.

The system of the present disclosure provides a generic docking station with internet of things (IoT) interface for heterogeneous chargeable mobile devices. This means that design of the docking station is a generic design with robot sensor fusion which detects the docking station automatically and helps in precise docking. The generic design of the docking station enables docking different category of the chargeable mobile devices such as fork type, unit load type, and/or the like at same docking station with different charging currents. IoT enabled docking station communicates with the chargeable mobile devices and charges them based on battery health, quick/slow charge, category, task duration and/or the like. In other words, all the data connected over IoT is used for further processing to improve charging efficiency and task planning. In an embodiment, the present disclosure brings a design flexibility to the docking station and contact pads, so that the flexible design adjusts itself in translation and rotation axis for certain degrees of freedom if there is an error in docking.

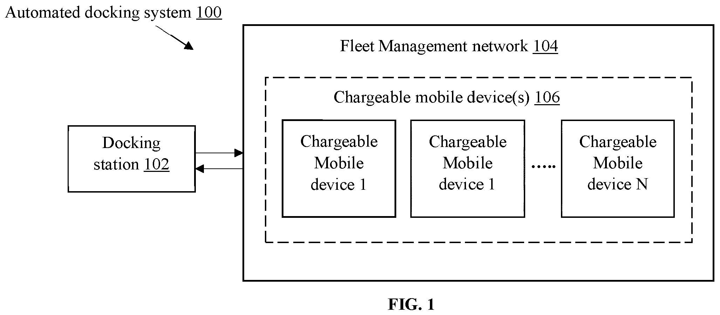

Referring now to the drawings, and more particularly to FIGS. 1 through 13, where similar reference characters denote corresponding features consistently throughout the figures, there are shown preferred embodiments and these embodiments are described in the context of the following exemplary system and/or method.

Reference numerals of one or more components of the automated docking system 100 for charging a chargeable mobile device 106 as depicted in the FIGS. 1 through 12 are provided in Table 1 below for ease of description:

**Table 1**

| Sl. No | Component | Numeral reference |
|---|---|---|
| 1 | Automated docking system | 100 |
| 2 | Docking station | 102 |
| 3 | Fleet management network | 104 |
| 4 | Chargeable mobile device | 106 |
| 5 | Base assembly | 202 |
| 6 | Base plate | 402 |
| 7 | First end of base plate | 402 A |
| 8 | Second end of base plate | 402 B |
| 9 | Plurality of mounting holes for grouting | 404A |
| 10 | Plurality of mounting holes for battery charger mount plate | 404B |
| 11 | Battery charger mount plate | 502 |
| 12 | First dead weight | 406 |
| 13 | Second dead weight | 408 |
| 14 | Rear plate | 410 |
| 15 | Plurality of coil springs | 412 A-C |
| 16 | Floating assembly | 204 |
| 17 | Rod housing | 414 |
| 18 | First side of rod housing | 414 A |
| 19 | Second side of rod housing | 414 B |
| 20 | Set of holes on first side of rod housing | 602 A-C |
| 21 | Set of holes on second side of rod housing | 602 D-F |
| 22 | Floating plate | 416 |
| 23 | Pair of flanges | 418 A-B |
| 24 | Hole of pair of flanges | 702 A-D |
| 25 | First set of guide rods | 420 A-B |
| 26 | First end of the first set of guide rods | 902 A-B |
| 27 | Second end of the first set of guide rods | 904 A-B |
| 28 | Pair of stoppers | 422 A-B |
| 29 | First set of tension springs | 910 A-B |
| 30 | Center assembly | 206 |
| 31 | Mounting block | 302 |
| 32 | Small Plate | 816 |
| 33 | Plurality of holes of mounting block | 818 A-D |
| 34 | Second set of guide rods | 424 A-B |
| 35 | First end of the second set of guide rods | 802 A-B |
| 36 | Second end of the second set of guide rods | 804 A-B |
| 37 | Second set of tension springs | 810 A-B |
| 38 | Angular assembly | 208 |
| 39 | Table assembly | 504 |
| 40 | Charging pad mounting plate | 426 |
| 41 | Top surface of charging pad mounting plate | 426 A |
| 42 | Bottom surface of charging pad mounting plate | 426 B |
| 43 | Charging pad | 428 |
| 44 | Plurality of standoffs | 430 A-D |
| 45 | First end of standoff | 812 A-D |
| 46 | Second end of standoff | 814 A-D |
| 47 | Plurality of rollers | 432 A-D |
| 48 | Plurality of self-centering springs | 434 A-B |
| 49 | First end of self-centering spring | 806 A-B |
| 50 | Second end of self-centering spring | 808 A-B |
| 51 | First set of pins mounted on the floating plate | 906 A-B |
| 52 | Second set of pins mounted on to the bottom surface of the charging pad mounting plate | 1002 A-B |
| 53 | Ball plunger | 506 |
| 54 | First end of the ball plunger | 506 A |
| 55 | Second end of the ball plunger | 506 B |
| 56 | Hole made on the floating plate | 908 |
| 57 | Plurality of angle restrictors | 436 A-B |
| 58 | Housing cover | 508 |
| 60 | Plurality of patterns of the housing cover | 214 |
| 61 | Battery charger | 210 |
| | | |
| 62 | Toggle clamp | 212 |
| 63 | Plurality of Rubber pads | 438 A-B |
| 64 | Memory | 1202 |
| 65 | One or more communication interfaces | 1204 |
| 66 | One or more hardware processors | 1206 |
| 67 | Database | 1208 |

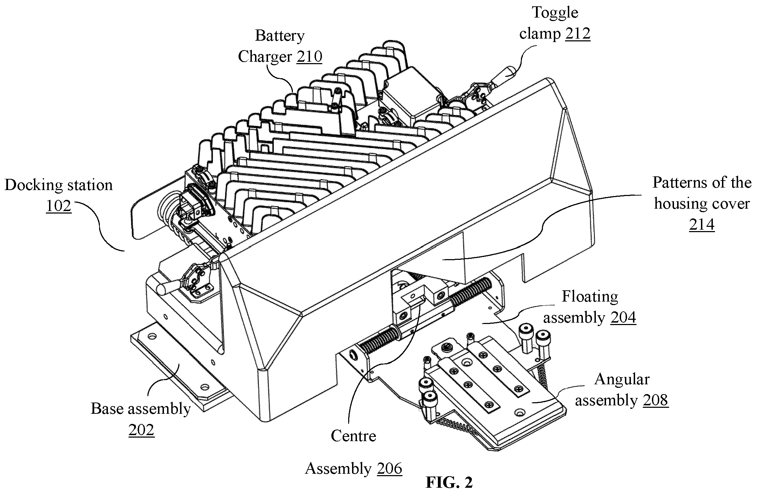

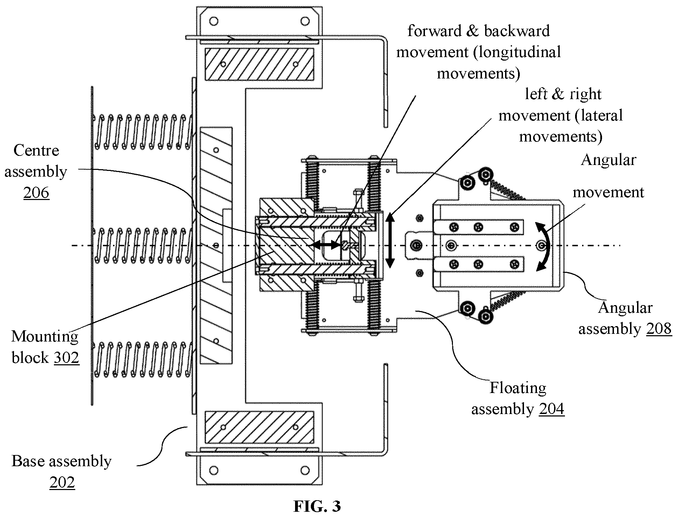

FIG. 1 depicts a block diagram of an automated docking system 100 for charging chargeable mobile devices 106, in accordance with an embodiment of the present disclosure. In the present disclosure, the expressions 'charging' may be referred as 'docking' and may be interchangeably used hereinafter. The automated docking system 100 comprises a docking station 102. In an embodiment, the docking station 102 is a cost effective and IoT enabled generic docking station that communicates with the chargeable mobile devices 106 and charges them based on battery health, quick/slow charge, category, duration of tasks to be implemented, and/or the like. FIG. 2 depicts an isometric view of the docking station 102 of the automated docking system 100 for charging the chargeable mobile devices 106, in accordance with an embodiment of the present disclosure. FIG. 3 depicts a cross-sectional top view of the docking station of the automated docking system 100 for charging the chargeable mobile devices 106, in accordance with an embodiment of the present disclosure. In an embodiment, the present disclosure brings a design flexibility to the docking station 102 and a charging pad 428, so that the flexible design adjusts itself in translation and rotation axis for certain degrees of freedom if there is an error in docking. As shown in FIG. 2 and FIG. 3, the docking station 102 comprises a base assembly 202, a floating assembly 204, a center assembly 206, and an angular assembly 208. In an embodiment, the center assembly 206, floating assembly 204 and the angular assembly 208 work together during an autodocking process of the docking system 100.

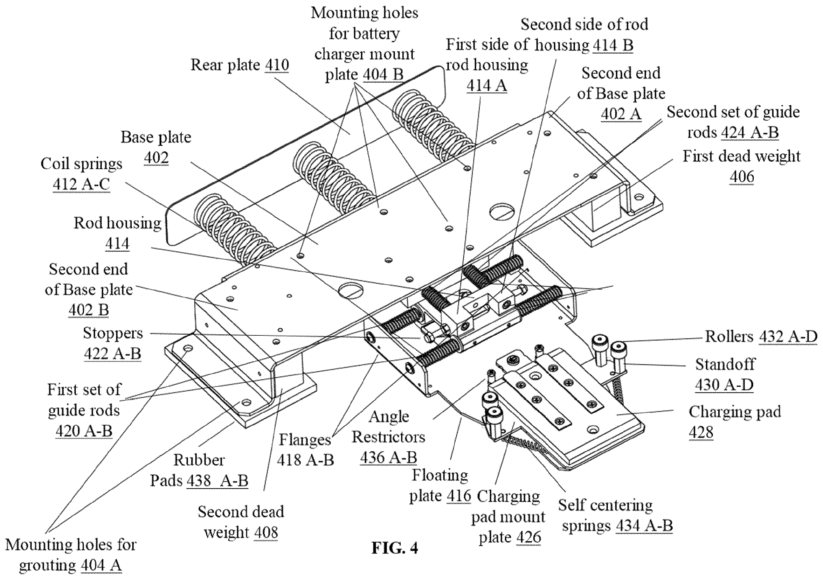

FIG. 4 depicts an isometric view of the docking station of the automated docking system 100 for charging the chargeable mobile devices 106 without battery charger 210 and a housing cover 508, in accordance with an embodiment of the present disclosure. As shown in FIG. 4, the base assembly 202 of the docking station 102 comprises a base plate 402 and a rear plate 410. The base plate 402 acts as main support plate of the automated docking system 100. The base plate 402 comprises a first end 402 A, a second end 402 B, a plurality of mounting holes 404 A adapted for provisioning grouting, and a plurality of mounting holes 404 B adapted for provisioning the battery charger mount plate 502. In an embodiment, the battery charger mount plate 502 is adapted to hold a battery charger 210 with help of a toggle clamp 212 which is mounted onto the battery charger mount plate 502. In other words, the battery charger mount plate 502 holds the battery charger 210 and the toggle clamp 212 together. In an embodiment, the first end 402 A of the base plate 402 is connected to a first dead weight 406 and the second end 402 B of the base plate 402 is connected to a second dead weight 408. In an embodiment, purpose of the first dead weight 406 and the second dead weight 408 is to secure position of docking station 102 during operations. The rear plate 410 is coupled to the base plate 402 through a plurality of coil springs 412 A-C. In an embodiment, each of the plurality of coil springs 412 A-C is adapted to provide a cushioning effect for the docking station 102 during an autodocking process of the automated docking system 100 for charging the chargeable mobile device 106. Generally, the chargeable mobile devices 106 possess certain speeds when they try to get dock. During the autodocking process, the docking station 102 gets affected by inertial forces by the chargeable mobile devices 102. The plurality of coil springs 412 A-C try to absorb such minor forces during the autodocking process. This is referred to as the cushioning effect. In other words, the plurality of coil springs 412 A-C and the rear plate 410 of base assembly 202 are used to provide additional cushioning effects for the whole docking station 102 when the chargeable mobile devices 106 (alternatively referred as mobile robots) are getting docked for charging. In an embodiment, as shown in FIG. 4, a plurality of rubber pads 438 A-B are kept underneath the base plate 402 while placing the docking station 102 onto ground (either with grouting or with dead weight). The plurality of rubber pads 438 A-B provide the cushioning effect or antivibration effect in case of grouting technique and frictional effect in case of dead weight type technique of placing of the docking station 102.

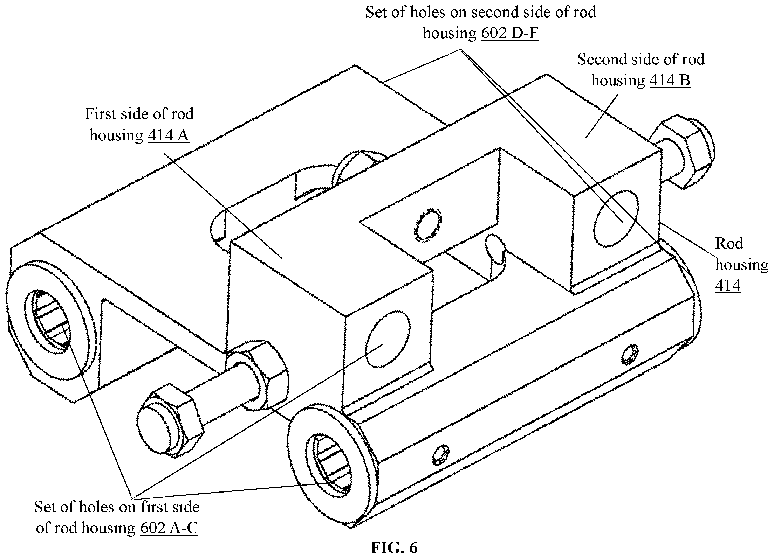

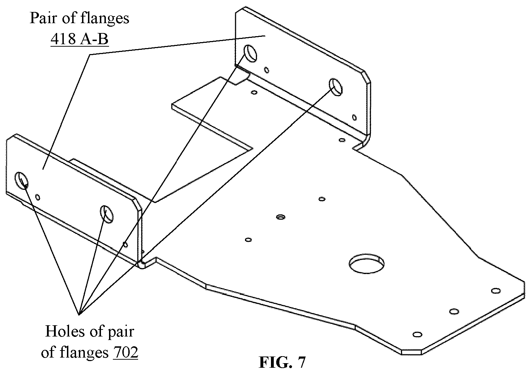

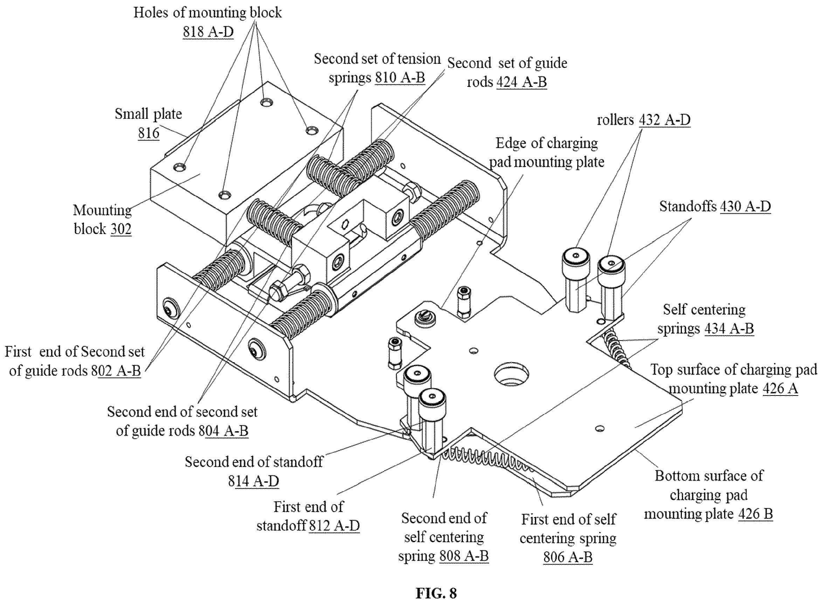

The floating assembly 204 of the docking station 102 comprises a rod housing 414, a floating plate 416, a first set of guide rods 420 A-B, a pair of stoppers 422 A-B, and a first set of tension springs 910 A-B. FIG. 6 depicts an isometric view of the rod housing 414 of the automated docking system 100 of FIG. 1, in accordance with an embodiment of the present disclosure. As shown in FIG. 4 and FIG. 6, the rod housing 414 comprises a first side 414 A and a second side 414 B, and each side of the rod housing comprises a set of holes 602 A-F. FIG. 7 depicts an isometric view of the floating plate 416 of the automated docking system 100 of FIG. 1, in accordance with an embodiment of the present disclosure. As shown in FIG. 4 and FIG. 7, the floating plate 416 comprises a pair of flanges 418 A-B and a flat portion substantially protruding towards an angular assembly 208, wherein each flange of the pair of flanges 418 A-B comprises a corresponding hole. FIG. 8 depicts an isometric view of the floating assembly 204 of the automated docking system 100 of FIG. 1 excluding the rod housing, in accordance with an embodiment of the present disclosure. As shown in FIG. 8, each guide rod of the first set of guide rods 420 A-B comprises a first end 902 A-B and a second end 904 A-B and each guide rod of the first set of guide rods 420 A-B is adapted to pass through a corresponding hole of the set of holes at a corresponding side of the rod housing 414. Further, each of the first end 902 A-B and the second end 904 A-B of each of the first set of guide rods 420 A-B is connected to a corresponding flange from the pair of flanges 418 A-B of the floating plate 416 via one or more screws. In other words, the first set of guide rods 420 A-B are inserted into the holes provided to the rod housing 414. Both end of the first set of guide rods 420 A-B are screwed to flange end of the floating plate 416 whereas flat end of the floating plate 416 is provided for a charging pad 428.

As shown in FIG. 4, the floating assembly 204 comprises the pair of stoppers 422 A-B. Each stopper from the pair of stoppers 422 A-B is connected to a corresponding side from the first side 414 A and the second side 414 B of the rod housing 414 and is adapted to adjust a lateral stroke required for the auto docking process of the automated docking system 100. In an embodiment, the lateral stroke may vary up to 45mm and depending on design and requirement. In the present disclosure, the lateral stroke is kept as 30mm stroke at each side of the floating assembly 204 assuming that lateral accuracy of the chargeable mobile devices 106 is within 30mm. So, the stroke is required to be changed, it is done by simply adjusting nuts of a corresponding stopper and the stroke is fixed. Further, as shown in FIG. 4, the floating assembly 204 comprises the first set of tension springs 910 A-B which are inserted over the first set of guide rods 420 A-B and positioned between the rod housing 414 and the pair of flanges 418 A-B of the floating plate 416. The first set of tension springs 910 A-B is adapted to permit a lateral movement of the docking station 102 from an initial position to a desired position during the autodocking process of the automated docking system 100 for charging the chargeable mobile device 106. In other words, use of the first set of tension springs 910 A-B on both sides is to always retain position of the rod housing 414 at center when the docking station 102 is not in operation. When the chargeable mobile device 106 ( say mobile robot) tries to get dock, the first set of tension springs 910 A-B allows the docking station 102 to move laterally in certain stroke fixed by a stopper mechanism. As shown in FIG. 3, the first set of tension springs 910 A-B helps in a left and right movement of the docking station 102.

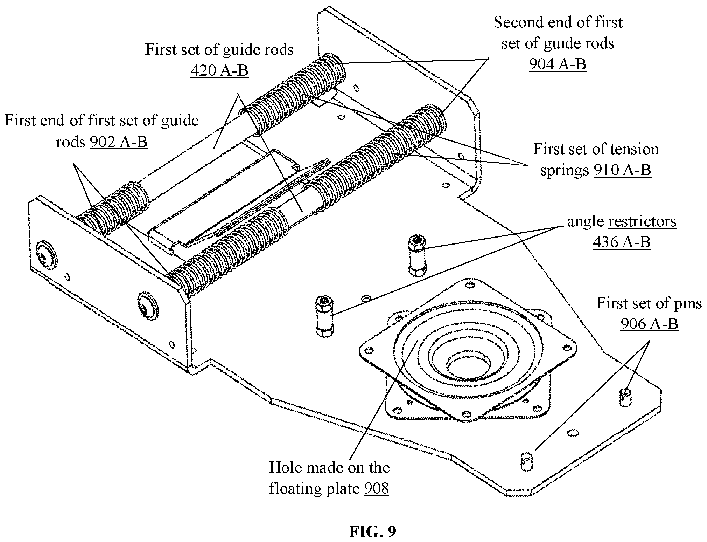

The center assembly 206 of the docking station 102 comprises a mounting block 302, a second set of guide rods 424 A-B, and a second set of tension springs 810 A-B. The mounting block 302 of the center assembly 206 comprises a plurality of holes 818 A-D. FIG. 9. depicts an inner view of the docking station of the automated docking system for charging chargeable mobile devices, in accordance with an embodiment of the present disclosure. It is shown in FIG. 8 that each guide rod of the second set of guide rods 424 A-B of the center assembly 206 comprises a first end 802 A-B and a second end 804 A-B. As shown in FIG. 4, the first end 802 A-B of each guide rod of the second set of guide rods 424 A-B is sliding inside a corresponding hole of the plurality of holes 818 A-D of the mounting block 302 and connected with each other by a small plate 816 and one or more screws. The second end 804 A-B of each guide rod of the second set of guide rods 424 A-B is coupled to the rod housing 414.

The second set of tension springs 810 A-B of the center assembly 206 is inserted over the second set of guide rods 424 A-B and positioned between the rod housing 414 and the mounting block 302. In an embodiment, the second set of tension springs 810 A-B is adapted to permit a longitudinal movement of the docking station 102 from an initial position to a desired position during the autodocking process of the automated docking system 100 for charging the chargeable mobile device 106. In other words, use of the second set of tension springs 810 A-B on the second set of guide rods 424 A-B is to always retain the position of the rod housing 414 at a specific position when the docking station 102 is not in operation. When the chargeable mobile device ( say mobile robot) tries to get dock, the second set of tension springs 810 A-B allows the docking station 102 to move longitudinally in certain stroke fixed by the stopper mechanism. As shown in FIG. 3, the second set of tension springs 810 A-B helps in a forward and backward movement of the docking station 102. The center assembly 206 of the of the docking station 102 provides a flexible cushioning for translation.

The angular assembly 208 of the docking station 102 is configured to provide an angular motion to the docking station 102 during the autodocking process of the automated docking system 100 for charging the chargeable mobile device 106. The angular assembly comprises a turn table assembly 504 mounted on the floating plate 416, a charging pad mounting plate 426, a charging pad 428, a plurality of standoffs 430 A-D, a plurality of rollers 432 A-D, a plurality of self-centering springs 434 A-B, a ball plunger 506, and a plurality of angle restrictors 436 A-B. In an embodiment, the table assembly 504 of the angular assembly 208 is a turn table assembly. The turn table assembly 504 is mounted to the floating plate 416 on which the charging pad 428 is mounted with help of the charging pad mount plate 426. The charging pad mounting plate 426 of the angular assembly 208 comprises a top surface 426 A and a bottom surface 426 B. The charging pad 428 is coupled to the table assembly 504 through the charging pad mounting plate 426. As shown in FIG. 4, each standoff from the plurality of standoffs 430 A-D of the angular assembly 208 comprises a first end 812 A-D and a second end 814 A-D. The first end 812 A-D of each standoff from the plurality of standoffs 430 A-D is connected to the charging pad mounting plate 426. In an embodiment, the plurality of rollers 432 A-D of the angular assembly 208 are configured to guide docking element (not shown) mounted to each of the plurality of chargeable devices 106. In an embodiment, the docking element is a part of the chargeable mobile device 106 which comes and gets connected to the charging pad 428 of the docking station 102 for charging the chargeable mobile device 106. Further, it is shown in FIG. 4 that each roller from the plurality of rollers 432 A-D of the angular assembly 208 is adapted to be connected to a corresponding second end of standoff from the plurality of standoffs 430 A-D via a screwing mechanism.

Further, the angular assembly 208 comprises the plurality of self-centering springs 434 A-B. In an embodiment, each self-centering spring from the plurality of self-centering springs 434 A-B comprises a first end 806 A-B and a second end 808 A-B. The first end 806 A-B of each self-centering spring from the plurality of self-centering springs 434 A-B is connected to a first set of pins 906 A-B mounted on the floating plate 416 and the second end 808 A-B of each self-centering spring from the plurality of self-centering springs 434 A-B is connected to a second set of pins 1002 A-B mounted on to the bottom surface 426 B of the charging pad mounting plate 426. In an embodiment, the ball plunger 506 of the angular assembly 208 comprises a first end 506 A and a second end 506 B. The first end 506 A of the ball plunger 506 represents a ball and is adapted to be in contact with a hole 908 made on the floating plate 416 when the automated docking system 100 is in an idle state and the second end 506 B of ball plunger 506 is mounted to the charging pad mounting plate 426. In an embodiment, the plurality of self-centering springs 434 A-B are configured to ensure keeping the angular assembly 208 at center with help of the ball plunger 506. The angular assembly 208 also comprises the plurality of angle restrictors 436 A-B which are mounted onto the floating plate 416 and positioned adjacent to the ball plunger 506. In an embodiment, the plurality of angle restrictors 436 A-B of the angular assembly 208 are adapted to control the angular motion of the angular assembly 208. As shown in FIG. 8, when the angular assembly 208 is moved by? a specific degree, then edge of the charging pad mounting plate 426 is collided with the plurality of angle restrictors 436 A-B resulting in a restricted and controlled motion of the angular assembly 208.

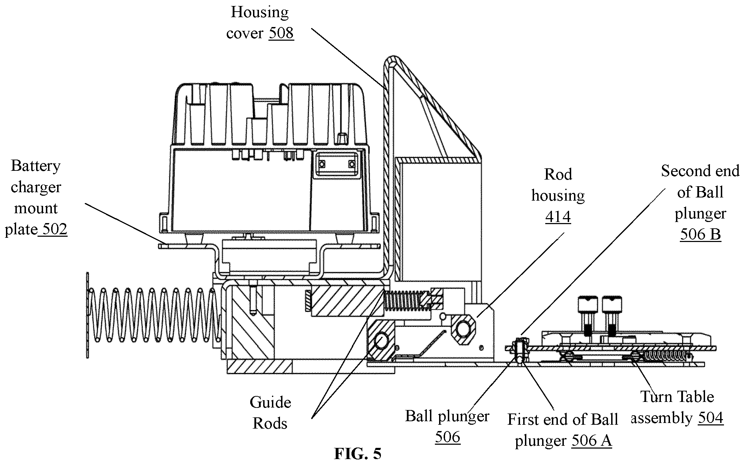

FIG. 5 depicts a cross-sectional side view of the docking station 102 of the automated docking system 100 for charging the chargeable mobile devices 106 with battery charger 210, in accordance with an embodiment of the present disclosure. It is shown in FIG. 5 that the automated docking system 100 comprises the housing cover 508 enclosing the docking station 102 and mounted to the base plate 402 of the base assembly 202. The housing cover 508 comprises a plurality of patterns 214 that enable the plurality of chargeable devices 106 a position and orientation (pose) detection of the docking station 102. In the present disclosure, the plurality of patterns 214 of the housing cover 508 could be of different complex shapes, size, type, length, and orientation. For example, the plurality of patterns 214 of the housing cover 508 can V-shaped, L-shaped, and/or the like. However, in the present disclosure, V-shaped patterns are created on the housing cover 508 so that it helps the chargeable mobile devices 106 to detect the pose of the docking station 102.

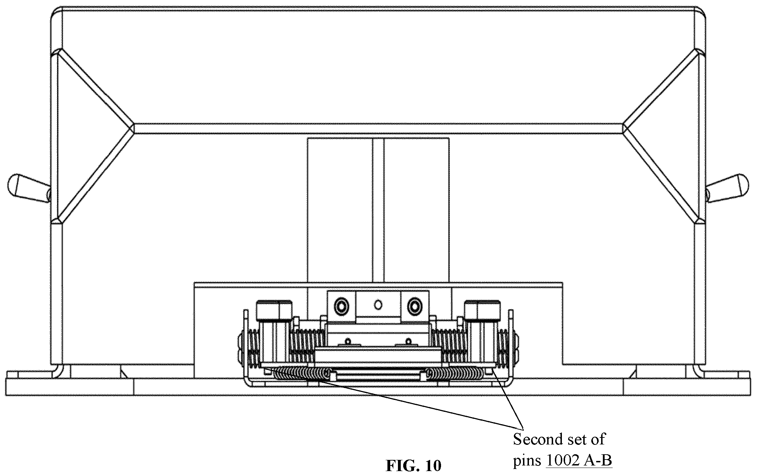

FIG. 10 depicts a front view of the docking station 102 of the automated docking system 100 for charging the chargeable mobile devices 106, in accordance with an embodiment of the present disclosure.

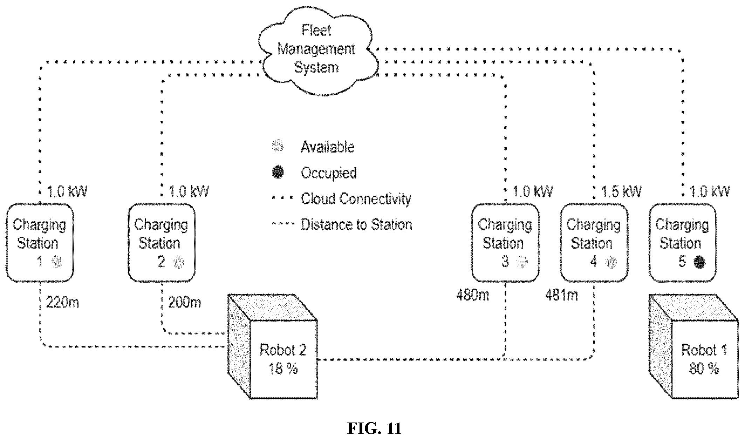

FIG. 11 depicts a functional diagram of a fleet management network 104 of the automated docking system 100 for charging the chargeable mobile devices 106, in accordance with an embodiment of the present disclosure. In an embodiment, the automated docking system 100 comprises the fleet management network 104. In the context of the present discourse, the expressions `fleet management network' may be referred to as `fleet management system' and may be interchangeably used hereinafter. The fleet management network 104 comprises a plurality of the chargeable mobile devices 106 to be charged at the docking station 102. In an embodiment, the chargeable mobile devices 106 may include but not limited to a robot, a vehicle, a machine, and/or the like. In an embodiment, a fleet of chargers are integrated to the fleet management system (FMS) 104, which is able to monitor and adjust power delivered to the chargeable mobile devices 106 efficiently, in order to increase lifetime of battery. As shown in FIG. 7, through the fleet management network 104, the chargeable mobile devices 106 are able to understand unoccupied charging stations, power capability, and their location.

Most of the docking stations are design for automation. As per the requirement by automation system, to bring design flexibility to the docking station 102 and to the charging pad 428, the floating assembly 204 which is connected to the base assembly 202 inside the docking station 102 is designed to provide flexible cushioning for translation using the center assembly 206 and rotation using the angular assembly 208. Rotation flexibility through the angular assembly 208 is achieved through the plurality of self-centering springs 434 A-B which are connected to the charging pad mount plate 426 and the floating plate 416 with help of the first set of pins 906 A-B and the second set of pins 1002 A-B. To this assembly, the charging pad 428 is connected. When the chargeable mobile device 106 comes to automatically dock, a slight translation and rotational error can be expected. In the present disclosure, the base assembly 202 of the docking station 102 aligns itself to get better contact with pads (not shown) on the chargeable mobile device 106.

The automated docking station 100 can be used for charging the chargeable mobile devices 106. One or more sensors comprising a 2D sensor, a 3D sensor or a combination of 2D and 3D sensors (3D+2D) are integrated with the automated docking system 100 which capture information to identify a docking station from a plurality of docking stations 102 in a predefined region and to estimate the position and orientation of the identified docking station. In an embodiment, the one or more sensors may include vision sensors, LIDAR, and other onboarding sensors. In the present disclosure, the one or more sensors are not visible and not depicted in the FIGS. In an embodiment, expression `vision sensors' may be referred as 'cameras' or `image capturing device' or `video capturing device' or `electronic device' and may be interchangeably used hereinafter. In an embodiment, the captured information comprises reflection pattern intensity of the docking station 102 obtained using the LIDAR sensors, unique V-shape patterns created on the housing cover 508, a plurality of visual fiducial markers, a combination of 2D and 3D markers. In an embodiment, the 3D marker can have shapes varying from a simple wedge design to predefined patterns, which is uniquely distinguishable from 3D data captured from a 3D camera (not shown) mounted on the chargeable mobile device 106. In an embodiment of the present disclosure, the vision sensor is an electronic device that captures information using a two-dimensional (2D) RGBD camera for identifying the plurality of visual fiducial markers such as April tag. The captured information is fed to sensor fusion where the captured information is fused with corresponding weights to estimate perfect pose for the chargeable mobile device 106 to dock it in global coordinate frame.

Further, the automated docking system 100 is backed by artificial intelligence-based system (e.g., one or more hardware processors 104) which helps in precise docking thereby improving charging efficiency and task planning. In an embodiment, the vision sensors are connected to (or are an integral part of) an external system (e.g., a robot wherein the automated docking system 100 is connected to this system for passing the captured information by the robot to the automated docking system 100 for charging the robot). The automated docking system 100 can handle different category of chargeable mobile devices 106 such as fork type, unit load type, and/or the like at same docking station with different charging currents and can be controlled independently. The docking stations 102 can be scanned via a sensor array for position and orientation. Based on information, the automated docking station 100 utilizes an artificial intelligence-based hardware processor (e.g., wherein the artificial intelligence-based hardware processor is either an integral part of the apparatus 100 or externally connected to the automated docking system 100 via input/output communication interfaces as known in the art) that makes the chargeable mobile devices 106 to dock with ease and effective based on the flexibility provided by the autodocking process of the automated docking system 100 in lateral, longitudinal and angular direction.

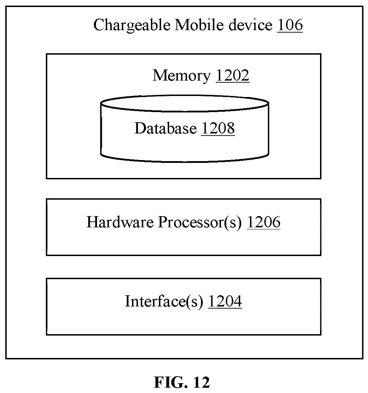

FIG. 12 depicts a functional block diagram of a chargeable mobile device 106 associated with the fleet management network 104 of the automated docking system 100, in accordance with an embodiment of the present disclosure.

In an embodiment, the chargeable mobile device 106 includes one or more hardware processors 1206, communication interface device(s) or input/output (I/O) interface(s) 1204 (also referred as interface(s)), and one or more data storage devices or memory 1202 operatively coupled to the one or more hardware processors 1206. The one or more processors 1206 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the chargeable mobile device 106 can be implemented in a variety of computing systems, such as laptop computers, notebooks, hand-held devices, workstations, mainframe computers, servers, a network cloud, robot, and the like.

The I/O interface device(s) 1204 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) 1204 can include one or more ports for connecting a number of devices to one another or to another server.

The automated docking system 100 may be equipped with a 2D and/or a 3D camera (also referred as an electronic device) which provides information the plurality of visual fiducial markers, a combination of 2D and 3D markers to the automated docking system 100, wherein the docking system 100 enables identification of available charging stations and pose estimation the identified charging stations for charging the chargeable mobile devices 106.

The memory 1202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, a database 1208 is comprised in the memory 1202, wherein the database 1208 comprises information, for example, charging status of the chargeable mobile devices 106, unoccupied charging stations, power capability, and their location. The information stored in the database 1208 may further comprise position and estimation of docking stations estimated by the automated docking system 100 or the hardware processors 1206. The information stored in the database 1208 may further comprise information captured by the LIDAR sensors, vision sensors, shape patterns created on the housing cover 508, and/or the like. The memory 1202 further comprises (or may further comprise) information pertaining to input(s)/output(s) of each step performed by the systems and methods of the present disclosure. In other words, input(s) fed at each step and output(s) generated at each step are comprised in the memory 1202 and can be utilized in further processing and analysis.

In an embodiment, the automated docking system 100 is connected to the chargeable mobile devices 106 or an external system via one or more coupling systems (e.g., wired connectors as known in the art or wireless systems) or input/output interfaces as known in the art. The chargeable mobile device 106 comprises (or may comprise) the components as shown in FIG. 8, wherein the chargeable mobile device 106 or external system receives information being captured by the electronic device. In an embodiment, the electronic device may be comprised in the external system or the chargeable mobile device 106. The same information is processed by one or more hardware processors 1206 which estimate position and orientation of the docking station. The same information is processed by the one or more hardware processors 1206 that enables the chargeable mobile devices 106 to automatically dock, based on the captured information. In an embodiment, the chargeable mobile device 106 may be comprised within (or integrated inside) the automated docking system 100. In another embodiment, the chargeable mobile device 106 may be externally connected to the automated docking system 100 via one or more interfaces/coupling mechanism/connectivity means, etc.

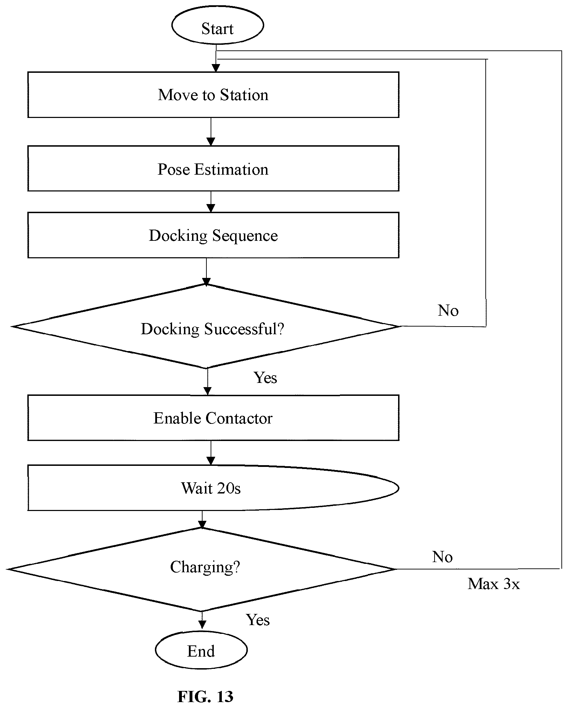

FIG 13, with reference to FIGS. 1 through 12, depicts an exemplary flow chart illustrating an autodocking process for charging the chargeable mobile device 106 using the automated docking system 100 of FIG. 1, in accordance with an embodiment of the present disclosure. The steps of the autodocking process of the present disclosure will now be explained with reference to components of the chargeable mobile device 106 of FIG. 12, FIGS. 1 through 12, and the flow diagram as depicted in FIG. 13. As shown in FIG. 1, at first step, the chargeable mobile device 106 requests the fleet management system (FMS) 104 to identify a docking station from a plurality of docking stations 106 in a predefined region for charging when a battery level of the chargeable mobile device falls below a predefined threshold. In other words, when the battery level of the chargeable mobile device 106 drops below the predefined threshold, the chargeable mobile device 106 requests the fleet management system (FMS) 104 for nearby chargers. Based on availability, shortest distance, power capability, a docking station is identified and assigned to the chargeable mobile device 106. Further, the chargeable mobile device 106 first reaches the identified docking station's location and scans for a charging dock. At next step, the position and orientation of the identified docking station is estimated using a plurality of docking station data acquired by the chargeable mobile device 106. The plurality of docking station data is acquired using one or more sensors and other components of the chargeable mobile device 106. The plurality of docking station data comprises reflection pattern intensity of the docking station 102 obtained using the LIDAR sensors, unique V-shape patterns created on the housing cover 508, the plurality of visual fiducial markers, and the combination of 2D and 3D markers. Further, the autodocking process of the automated docking system 100 for charging the chargeable mobile device 106 is performed based on the position and orientation of the identified docking station 102. In other words, once the position and orientation of dock is identified, the chargeable mobile device 106 proceeds to dock with the identified docking station 102. Furthermore, a charging status of the chargeable mobile device 106 is determined when the autodocking process of the automated docking system 100 is complete. This means that the chargeable mobile device 106 engages its power contactor completing connection to the charger upon successful dock which is recognized by a hall sensor built into the dock. The power contactor ensures the charging pad 428 is isolated from battery when not in use. However, if the chargeable mobile device 106 does not start charging after 20 seconds post successful docking, an alert is sent to the fleet management network 104 about the charging status of the chargeable mobile device 106.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. An automated docking system (100) for charging a chargeable mobile device (106), the automated docking system (100) comprising:
a docking station (102), wherein the docking station (102) comprises:
a base assembly (202), wherein the base assembly (202) comprises:
a base plate (402), wherein the base plate (402) comprises a first end (402 A), a second end (402 B), a plurality of mounting holes (404 A) adapted for provisioning grouting and a plurality of mounting holes (404 B) adapted for provisioning a battery charger mount plate (502), and wherein the first end (402 A) of the base plate (402) is connected to a first dead weight (406) and the second end (402 B) of the base plate (402) is connected to a second dead weight (408);
a rear plate (410) coupled to the base plate (402) through a plurality of coil springs (412 A-C), wherein each of the plurality of coil springs (412 A-C) is adapted to provide a cushioning effect for the docking station (102) during an autodocking process of the automated docking system (100) for charging the chargeable mobile device (106);
a floating assembly (204), wherein the floating assembly (204) comprises:
a rod housing (414), wherein the rod housing (414) comprises a first side (414 A) and a second side (414 B), and wherein each side of the rod housing (414) comprises a set of holes (602 A-F);
a floating plate (416), wherein the floating plate (416) comprises a pair of flanges (418 A-B) and a flat portion substantially protruding towards an angular assembly (208), wherein each flange of the pair of flanges (418 A-B) comprises a corresponding hole;
a first set of guide rods (420 A-B), wherein each guide rod of the first set of guide rods (420 A-B) comprises a first end (902 A-B) and a second end (904 A-B), and wherein each guide rod of the first set of guide rods (420 A-B) is adapted to pass through a corresponding hole of the set of holes at a corresponding side of the rod housing (414), and each of the first end (902 A-B) and the second end (904 A-B) of each of the first set of guide rods (420 A-B) is connected to a corresponding flange from the pair of flanges (418 A-B) of the floating plate (416) via one or more screws;
a pair of stoppers (422 A-B), wherein each stopper from the pair of stoppers (422 A-B) is connected to a corresponding side from the first side (414 A) and the second side (414 B) of the rod housing (414) and is adapted to adjust a lateral stroke required for the auto docking process of the automated docking system (100); and
a first set of tension springs (910 A-B) inserted over the first set of guide rods (420 A-B) and positioned between the rod housing (414) and the pair of flanges (418 A-B) of the floating plate (416), wherein the first set of tension springs (910 A-B) is adapted to permit a lateral movement of the docking station (102) from an initial position to a desired position during the autodocking process of the automated docking system (100) for charging the chargeable mobile device (106);
a center assembly (206), wherein the center assembly (206) comprises:
a mounting block (302) having a plurality of holes (818 A-D);
a second set of guide rods (424 A-B), wherein each guide rod of the second set of guide rods (424 A-B) comprises a first end (802 A-B) and a second end (804 A-B), and wherein the first end (802 A-B) of each guide rod of the second set of guide rods (424 A-B) is sliding inside a corresponding hole of the plurality of holes (818 A-D) of the mounting block (302) and connected with each other by a small plate (816) and one or more screws, and the second end (804 A-B) of each guide rod of the second set of guide rods (424 A-B) is coupled to the rod housing (414); and
a second set of tension springs (810 A-B) inserted over the second set of guide rods (424 A-B) and positioned between the rod housing (414) and the mounting block (302), wherein the second set of tension springs (810 A-B) is adapted to permit a longitudinal movement of the docking station (102) from an initial position to a desired position during the autodocking process of the automated docking system (100) for charging the chargeable mobile device (106);
the angular assembly (208) configured to provide an angular motion to the docking station (102) during the autodocking process of the automated docking system (100) for charging the chargeable mobile device (106); and
a fleet management network (104) comprising a plurality of the chargeable mobile devices (106) to be charged at the docking station (102).

2. The automated docking system (100) as claimed in claim 1, wherein the angular assembly (208) comprises:
a table assembly (504) mounted on the floating plate (416);
a charging pad mounting plate (426), wherein the charging pad mounting plate (426) comprises a top surface (426 A) and a bottom surface (426 B);
a charging pad (428), wherein the (428) charging pad (428) is coupled to the table assembly (504) through the charging pad mounting plate (426);
a plurality of standoffs (430 A-D), wherein each standoff from the plurality of standoffs (430 A-D) comprises a first end (812 A-D) and a second end (814 A-D), and wherein the first end (812 A-D) of each standoff from the plurality of standoffs (430 A-D) is connected to the charging pad mounting plate (426);
a plurality of rollers (432 A-D), wherein each roller from the plurality of rollers (432 A-D) is adapted to be connected to a corresponding second end of standoff from the plurality of standoffs (430 A-D) via a screwing mechanism;
a plurality of self-centering springs (434 A-B), wherein each self-centering spring from the plurality of self-centering springs (434 A-B) comprises a first end (806 A-B) and a second end (808 A-B), and wherein the first end (806 A-B) of each self-centering spring from the plurality of self-centering springs (434 A-B) is connected to a first set of pins (906 A-B) mounted on the floating plate (416) and the second end (808 A-B) of each self-centering spring from the plurality of self-centering springs (434 A-B) is connected to a second set of pins (1002 A-B) mounted on to the bottom surface (426 B) of the charging pad mounting plate (426);
a ball plunger (506), wherein the ball plunger (506) comprises a first end (506 A) and a second end (506 B), and wherein the first end (506 A) of the ball plunger (506) is adapted to be in contact with a hole (908) made on the floating plate (416) when the automated docking system (100) is in an idle state and the second end (506 B) of the ball plunger (506) is mounted to the charging pad mounting plate (426); and
a plurality of angle restrictors (436 A-B) adapted to control the angular motion of the angular assembly (208), wherein the plurality of angle restrictors (436 A-B) are mounted onto the floating plate (416) and positioned adjacent to the ball plunger (506).

3. The automated docking system (100) as claimed in claim 1, comprises a housing cover (508) enclosing the docking station (102) and mounted to the base plate (402) of the base assembly (202), wherein the housing cover (508) comprises a plurality of patterns (214) that enable the plurality of chargeable devices (106) a position and orientation (pose) detection of the docking station (102).

4. The automated docking system (100) as claimed in claim 1, wherein the battery charger mount plate (502) is adapted to hold a battery charger (210) with help of a toggle clamp (212) which is mounted onto the battery charger mount plate (502).

5. The automated docking system (100) as claimed in claim 1, wherein the table assembly (504) is a turn table assembly.

6. The automated docking system (100) as claimed in claim 2, wherein the plurality of rollers (432 A-D) are configured to guide docking element mounted to each of the plurality of chargeable devices (106).

7. The automated docking system (100) as claimed in claim 2, wherein the plurality of self-centering springs (434 A-B) are configured to ensure keeping the angular assembly (208) at center with help of the ball plunger (506).

## Patentansprüche

1. Automatisiertes Andocksystem (100) zum Laden einer aufladbaren mobilen Vorrichtung (106), wobei das automatisierte Andocksystem (100) umfasst:
eine Andockstation (102), wobei die Andockstation (102) umfasst:
eine Basisanordnung (202), wobei die Basisanordnung (202) umfasst:
eine Basisplatte (402), wobei die Basisplatte (402) ein erstes Ende (402A), ein zweites Ende (402B), eine Mehrzahl von Montagelöchern (404A), die zum Bereitstellen von Verguss ausgelegt sind, und eine Mehrzahl von Montagelöchern (404B), die zum Bereitstellen einer Batterieladegerät-Montageplatte (502) ausgelegt sind, umfasst, und wobei das erste Ende (402A) der Basisplatte (402) mit einem ersten Eigengewicht (406) verbunden ist und das zweite Ende (402B) der Basisplatte (402) mit einem zweiten Eigengewicht (408) verbunden ist;
eine hintere Platte (410), die mit der Basisplatte (402) durch eine Mehrzahl von Schraubenfedern (412 A-C) gekoppelt ist, wobei jede der Mehrzahl von Schraubenfedern (412 A-C) dazu ausgelegt ist, einen Dämpfungseffekt für die Andockstation (102) während eines automatischen Andockprozesses des automatisierten Andocksystems (100) zum Laden der aufladbaren mobilen Vorrichtung (106) bereitzustellen;
eine schwimmende Anordnung (204), wobei die schwimmende Anordnung (204) umfasst:
ein Stangengehäuse (414), wobei das Stangengehäuse (414) eine erste Seite (414A) und eine zweite Seite (414B) umfasst, und wobei jede Seite des Stangengehäuses (414) einen Satz von Löchern (602 A-F) umfasst;
eine schwimmende Platte (416), wobei die schwimmende Platte (416) ein Paar von Flanschen (418 A-B) und einen flachen Abschnitt, der im Wesentlichen in Richtung einer Winkelanordnung (208) vorsteht, umfasst, wobei jeder Flansch des Paars von Flanschen (418 A-B) ein entsprechendes Loch umfasst;
einen ersten Satz von Führungsstangen (420 A-B), wobei jede Führungsstange des ersten Satzes von Führungsstangen (420 A-B) ein erstes Ende (902 A-B) und ein zweites Ende (904 A-B) umfasst, und wobei jede Führungsstange des ersten Satzes von Führungsstangen (420 AB) dazu ausgelegt ist, durch ein entsprechendes Loch des Satzes von Löchern an einer entsprechenden Seite des Stangengehäuses (414) zu verlaufen, und jedes des ersten Endes (902 A-B) und des zweiten Endes (904 A-B) jeder des ersten Satzes von Führungsstangen (420 A-B) mit einem entsprechenden Flansch des Paars von Flanschen (418 A-B) der schwimmenden Platte (416) über eine oder mehrere Schrauben verbunden ist;
ein Paar von Anschlägen (422 A-B), wobei jeder Anschlag des Paars von Anschlägen (422 A-B) mit einer entsprechenden Seite der ersten Seite (414A) und der zweiten Seite (414B) des Stangengehäuses (414) verbunden ist und dazu ausgelegt ist, einen seitlichen Hub, der für den automatischen Andockprozess des automatisierten Andocksystems (100) erforderlich ist, einzustellen; und
einen ersten Satz von Zugfedern (910 A-B), die über den ersten Satz von Führungsstangen (420 A-B) eingesetzt und zwischen dem Stangengehäuse (414) und dem Paar von Flanschen (418 A-B) der schwimmenden Platte (416) positioniert sind, wobei der erste Satz von Zugfedern (910 A-B) dazu ausgelegt ist, eine seitliche Bewegung der Andockstation (102) von einer Ausgangsposition zu einer gewünschten Position während des automatischen Andockprozesses des automatisierten Andocksystems (100) zum Laden der aufladbaren mobilen Vorrichtung (106) zu ermöglichen;
eine Mittelanordnung (206), wobei die Mittelanordnung (206) umfasst:
einen Montageblock (302) mit einer Mehrzahl von Löchern (818 A-D);
einen zweiten Satz von Führungsstangen (424 A-B), wobei jede Führungsstange des zweiten Satzes von Führungsstangen (424 A-B) ein erstes Ende (802 A-B) und ein zweites Ende (804 A-B) umfasst, und wobei das erste Ende (802 A-B) jeder Führungsstange des zweiten Satzes von Führungsstangen (424 A-B) innerhalb eines entsprechenden Lochs der Mehrzahl von Löchern (818 A-D) des Montageblocks (302) gleitet und durch eine kleine Platte (816) und eine oder mehrere Schrauben miteinander verbunden ist, und das zweite Ende (804 A-B) jeder Führungsstange des zweiten Satzes von Führungsstangen (424 A-B) mit dem Stangengehäuse (414) gekoppelt ist; und
einen zweiten Satz von Zugfedern (810 A-B), die über den zweiten Satz von Führungsstangen (424 A-B) eingesetzt und zwischen dem Stangengehäuse (414) und dem Montageblock (302) positioniert sind, wobei der zweite Satz von Zugfedern (810 A-B) dazu ausgelegt ist, eine Längsbewegung der Andockstation (102) von einer Ausgangsposition zu einer gewünschten Position während des automatischen Andockprozesses des automatisierten Andocksystems (100) zum Laden der aufladbaren mobilen Vorrichtung (106) zu ermöglichen;
wobei die Winkelanordnung (208) dazu konfiguriert ist, eine Winkelbewegung für die Andockstation (102) während des automatischen Andockprozesses des automatisierten Andocksystems (100) zum Laden der aufladbaren mobilen Vorrichtung (106) bereitzustellen; und
ein Flottenverwaltungsnetzwerk (104), das eine Mehrzahl der aufladbaren mobilen Vorrichtungen (106) umfasst, die an der Andockstation (102) zu laden sind.

2. Automatisiertes Andocksystem (100) nach Anspruch 1, wobei die Winkelanordnung (208) umfasst:
eine Tischanordnung (504), die auf der schwimmenden Platte (416) montiert ist;
eine Ladepad-Montageplatte (426), wobei die Ladepad-Montageplatte (426) eine obere Oberfläche (426 A) und eine untere Oberfläche (426 B) umfasst;
ein Ladepad (428), wobei das (428) Ladepad (428) mit der Tischanordnung (504) durch die Ladepad-Montageplatte (426) gekoppelt ist;
eine Mehrzahl von Abstandshaltern (430 A-D), wobei jeder Abstandshalter aus der Mehrzahl von Abstandshaltern (430 A-D) ein erstes Ende (812 A-D) und ein zweites Ende (814 A-D) umfasst, und wobei das erste Ende (812 A-D) jedes Abstandshalters aus der Mehrzahl von Abstandshaltern (430 A-D) mit der Ladepad-Montageplatte (426) verbunden ist;
eine Mehrzahl von Rollen (432 A-D), wobei jede Rolle aus der Mehrzahl von Rollen (432 A-D) dazu ausgelegt ist, mit einem entsprechenden zweiten Ende des Abstandshalters aus der Mehrzahl von Abstandshaltern (430 A-D) über einen Schraubmechanismus verbunden zu werden;
eine Mehrzahl von selbstzentrierenden Federn (434 A-B), wobei jede selbstzentrierende Feder aus der Mehrzahl von selbstzentrierenden Federn (434 A-B) ein erstes Ende (806 A-B) und ein zweites Ende (808 A-B) umfasst, und wobei das erste Ende (806 A-B) jeder selbstzentrierenden Feder aus der Mehrzahl von selbstzentrierenden Federn (434 A-B) mit einem ersten Satz von Stiften (906 A-B) verbunden ist, die auf der schwimmenden Platte (416) montiert sind, und das zweite Ende (808 A-B) jeder selbstzentrierenden Feder aus der Mehrzahl von selbstzentrierenden Federn (434 A-B) mit einem zweiten Satz von Stiften (1002 A-B) verbunden ist, die auf der unteren Oberfläche (426 B) der Ladepad-Montageplatte (426) montiert sind;
einen Kugelkolben (506), wobei der Kugelkolben (506) ein erstes Ende (506 A) und ein zweites Ende (506 B) umfasst, und wobei das erste Ende (506 A) des Kugelkolbens (506) dazu ausgelegt ist, mit einem Loch (908) in Kontakt zu sein, das auf der schwimmenden Platte (416) hergestellt ist, wenn sich das automatisierte Andocksystem (100) in einem Ruhezustand befindet und das zweite Ende (506 B) des Kugelkolbens (506) an der Ladepad-Montageplatte (426) montiert ist; und
eine Mehrzahl von Winkelbegrenzern (436 A-B), die dazu ausgelegt sind, die Winkelbewegung der Winkelanordnung (208) zu steuern, wobei die Mehrzahl von Winkelbegrenzern (436 A-B) auf der schwimmenden Platte (416) montiert und neben dem Kugelkolben (506) positioniert sind.

3. Automatisiertes Andocksystem (100) nach Anspruch 1, das eine Gehäuseabdeckung (508) umfasst, die die Andockstation (102) umschließt und an der Basisplatte (402) der Basisanordnung (202) montiert ist, wobei die Gehäuseabdeckung (508) eine Mehrzahl von Mustern (214) umfasst, die der Mehrzahl von aufladbaren Vorrichtungen (106) eine Positions- und Orientierungs- (Pose-) Erfassung der Andockstation (102) ermöglichen.

4. Automatisiertes Andocksystem (100) nach Anspruch 1, wobei die Batterieladegerät-Montageplatte (502) dazu ausgelegt ist, ein Batterieladegerät (210) mithilfe einer Kniehebelklemme (212) zu halten, die auf der Batterieladegerät-Montageplatte (502) montiert ist.

5. Automatisiertes Andocksystem (100) nach Anspruch 1, wobei die Tischanordnung (504) eine Drehtischanordnung ist.

6. Automatisiertes Andocksystem (100) nach Anspruch 2, wobei die Mehrzahl von Rollen (432 A-D) dazu konfiguriert ist, ein Andockelement zu führen, das an jeder der Mehrzahl von aufladbaren Vorrichtungen (106) montiert ist.

7. Automatisiertes Andocksystem (100) nach Anspruch 2, wobei die Mehrzahl von selbstzentrierenden Federn (434 A-B) dazu konfiguriert ist, sicherzustellen, dass die Winkelanordnung (208) mithilfe des Kugelkolbens (506) in der Mitte gehalten wird.

## Revendications

1. Système de station d'accueil automatisé (100) pour recharger un dispositif mobile rechargeable (106), le système d'accueil automatisé (100) comprenant :
une station d'accueil (102), dans lequel la station d'accueil (102) comprend :
un ensemble de base (202), dans lequel l'ensemble de base (202) comprend
une plaque de base (402), dans lequel la plaque de base (402) comprend une première extrémité (402A), une seconde extrémité (402B), une pluralité de trous de montage (404A) adaptés pour fournir un scellement et une pluralité de trous de montage (404B) adaptés pour fournir une plaque de montage de chargeur de batterie (502), et dans lequel la première extrémité (402A) de la plaque de base (402) est reliée à un premier poids mort (406) et la seconde extrémité (402B) de la plaque de base (402) est reliée à un second poids mort (408) ;
une plaque arrière (410) couplée à la plaque de base (402) par l'intermédiaire d'une pluralité de ressorts hélicoïdaux (412 A-C), dans lequel chacun de la pluralité de ressorts hélicoïdaux (412 A-C) est adapté pour offrir un effet amortissant à la station d'accueil (102) pendant un processus d'accueil automatique du système d'accueil automatisé (100) pour recharger le dispositif mobile rechargeable (106) ;
un ensemble flottant (204), dans lequel l'ensemble flottant (204) comprend
un logement de tige (414), dans lequel le logement de tige (414) comprend un premier côté (414A) et un second côté (414B), et dans lequel chaque côté du logement de tige (414) comprend un ensemble de trous (602 A-F) ;
une plaque flottante (416), dans lequel la plaque flottante (416) comprend une paire de brides (418 A-B) et une partie plate dépassant sensiblement vers un ensemble angulaire (208), dans lequel chaque bride de la paire de brides (418 A-B) comprend un trou correspondant ;
un premier ensemble de tiges de guidage (420 A-B), dans lequel chaque tige de guidage du premier ensemble de tiges de guidage (420 A-B) comprend une première extrémité (902 A-B) et une seconde extrémité (904 A-B), et dans lequel chaque tige de guidage du premier ensemble de tiges de guidage (420 A-B) est adaptée pour passer à travers un trou correspondant de l'ensemble de trous au niveau d'un côté correspondant du logement de tige (414), et chacune de la première extrémité (902 A-B) et de la seconde extrémité (904 A-B) de chacune du premier ensemble de tiges de guidage (420 A-B) est reliée à une bride correspondante de la paire de brides (418 A-B) de la plaque flottante (416) par l'intermédiaire d'une ou plusieurs vis ;
une paire de butées (422 A-B), dans lequel chaque butée de la paire de butées (422 A-B) est reliée à un côté correspondant du premier côté (414A) et du second côté (414B) du logement de tige (414). Ces butées sont conçues pour ajuster une course latérale requise pour le processus d'accueil automatique du système d'accueil automatisé (100) ; et
un premier ensemble de ressorts de tension (910 A-B) inséré sur le premier ensemble de tiges de guidage (420 A-B) et positionné entre le logement de tige (414) et la paire de brides (418 A-B) de la plaque flottante (416), dans lequel le premier ensemble de ressorts de tension (910 A-B) est adapté pour permettre un mouvement latéral de la station d'accueil (102) entre une position initiale et une position souhaitée pendant le processus d'accueil automatique du système d'accueil automatisé (100) pour recharger le dispositif mobile rechargeable (106) ;
un ensemble central (206), dans lequel l'ensemble central (206) comprend :
un bloc de montage (302) ayant une pluralité de trous (818 A-D) ;
un second ensemble de tiges de guidage (424 A-B), dans lequel chaque tige de guidage du second ensemble de tiges de guidage (424 A-B) comprend une première extrémité (802 A-B) et une seconde extrémité (804 A-B), et dans lequel la première extrémité (802 A-B) de chaque tige de guidage du second ensemble de tiges de guidage (424 A-B) glisse dans un trou correspondant de la pluralité de trous (818 A-D) du bloc de montage (302) et reliées aux autres par une petite plaque (816) et une ou plusieurs vis, et la seconde extrémité (804 A-B) de chaque tige de guidage du second ensemble de tiges de guidage (424 A-B) est couplée au logement de tige (414) ; et
un second ensemble de ressorts de tension (810 A-B) inséré sur le second ensemble de tiges de guidage (424 A-B) et positionné entre le logement de tige (414) et le bloc de montage (302), dans lequel le second ensemble de ressorts de tension (810 A-B) est adapté pour permettre un mouvement longitudinal de la station d'accueil (102) entre une position initiale et une position souhaitée pendant le processus d'accueil automatique du système d'accueil automatisé (100) pour recharger le dispositif mobile rechargeable (106) ;
l'ensemble angulaire (208) configuré pour fournir un mouvement angulaire à la station d'accueil (102) pendant le processus d'accueil automatique du système d'accueil automatisé (100) pour recharger le dispositif mobile rechargeable (106) ; et
un réseau de gestion de parc (104) comprenant une pluralité des dispositifs mobiles rechargeables (106) à recharger au niveau de la station d'accueil (102).

2. Système d'accueil automatisé (100) selon la revendication 1, dans lequel l'ensemble angulaire (208) comprend :
un ensemble de table (504) monté sur la plaque flottante (416) ;
une plaque de montage du pad de charge (426), dans lequel la plaque de montage du pad de charge (426) comprend une surface supérieure (426 A) et une surface inférieure (426 B) ;
un pad de charge (428), dans lequel le (428) pad de charge (428) est couplé à l'ensemble de table (504) par l'intermédiaire de la plaque de montage du pad de charge (426) ;
une pluralité d'entretoises (430 A-D), dans lequel chaque entretoise de la pluralité d'entretoises (430 A-D) comprend une première extrémité (812 A-D) et une seconde extrémité (814 A-D), et dans lequel la première extrémité (812 A-D) de chaque entretoise de la pluralité d'entretoises (430 A-D) est reliée à la plaque de montage du pad de charge (426) ;
une pluralité de rouleaux (432 A-D), dans lequel chaque rouleau de la pluralité de rouleaux (432 A-D) est adapté pour être relié à une seconde extrémité correspondante d'entretoise de la pluralité d'entretoises (430 A-D) par l'intermédiaire d'un mécanisme de vissage ;
une pluralité de ressorts auto-centrants (434 A-B), dans lequel chaque ressort auto-centrant de la pluralité de ressorts auto-centrants (434 A-B) comprend une première extrémité (806 A-B) et une seconde extrémité (808 A-B), et dans lequel la première extrémité (806 A-B) de chaque ressort auto-centrants de la pluralité de ressorts auto-centrants (434 A-B) est reliée à un premier ensemble de broches (906 A-B) monté sur la plaque flottante (416) et la seconde extrémité (808 A-B) de chaque ressort auto-centrant de la pluralité de ressorts auto-centrants (434 A-B) est reliée à un second ensemble de broches (1002 A-B) monté sur la surface inférieure (426 B) de la plaque de montage du pad de charge (426) ;
un piston à bille (506), dans lequel le piston à bille (506) comprend une première extrémité (506 A) et une seconde extrémité (506 B), et dans lequel la première extrémité (506 A) du piston à bille (506) est adaptée pour être en contact avec un trou (908) réalisé sur la plaque flottante (416) lorsque le système d'accueil automatisé (100) est dans un état de repos et la seconde extrémité (506 B) du piston à bille (506) est montée sur la plaque de montage du pad de charge (426) ; et
une pluralité de limiteurs d'angle (436 A-B) adaptés pour commander le mouvement angulaire de l'ensemble angulaire (208), dans lequel la pluralité de limiteurs d'angle (436 A-B) sont montés sur la plaque flottante (416) et positionnés à proximité piston à bille (506).

3. Système d'accueil automatisé (100) selon la revendication 1, comprenant un couvercle de logement (508) enfermant la station d'accueil (102) et monté sur la plaque de base (402) de l'ensemble de base (202), dans lequel le couvercle de logement (508) comprend une pluralité de motifs (214) qui permettent à la pluralité de dispositifs rechargeables (106) une détection de position et d'orientation (pose) de la station d'accueil (102).

4. Système d'accueil automatisé (100) selon la revendication 1, dans lequel la plaque de montage de chargeur de batterie (502) est adaptée pour maintenir un chargeur de batterie (210) à l'aide d'une pince à genouillère (212) qui est montée sur la plaque de montage de chargeur de batterie (502).

5. Système d'accueil automatisé (100) selon la revendication 1, dans lequel l'ensemble de table (504) est un ensemble à plateau tournant.

6. Système d'accueil automatisé (100) selon la revendication 2, dans lequel la pluralité de rouleaux (432 A-D) sont configurés pour guider un élément d'accueil monté sur chacun de la pluralité de dispositifs rechargeables (106).

7. Système d'accueil automatisé (100) selon la revendication 2, dans lequel la pluralité de ressorts auto-centrants (434 A-B) sont configurés pour garantir le maintien de l'ensemble angulaire (208) au centre à l'aide du piston à bille (506).
